# EUROPEAN PATENT APPLICATION

(11) **EP 4 694 382 A1**
(43) Date of publication of application: **11.02.2026**
(21) Application number: 24930435.3
(22) Date of filing: 29.10.2024
(51) Int. Cl.: H04W 52/02

(54) **BROADCAST METHOD AND APPARATUS, METHOD AND APPARATUS FOR RECEIVING BROADCAST INFORMATION, AND ELECTRONIC DEVICE**

(30) Priority: 22.03.2024 CN 202410335350
(71) Applicant: China Satellite Network Innovation Co., Ltd, Beijing 100029 (CN)
(72) Inventor: QI, Dongqing, Beijing 100029 (CN); MANG, Ge, Beijing 100029 (CN); ZHANG, Lu, Beijing 100029 (CN); MA, Dongjun, Beijing 100029 (CN); YAN, Kaiyue, Beijing 100029 (CN)
(74) Representative: Habermann, Hruschka & Schnabel
(86) International application number: PCT/CN2024/128287
(87) International publication number: WO 2025/194777

(57) **Abstract**

The present disclosure provides methods and apparatuses for broadcasting and receiving broadcast information, and an electronic device, which relate to the technical field of satellite communication. The present disclosure firstly determines an edge area and a non-edge area of a coverage area of a current serving cell; then sends first broadcast information to the edge area and sends second broadcast information to the non-edge area, and the first broadcast information includes a set of system information related to a neighbor cell of the serving cell and a set of other information unrelated to the neighbor cell of the serving cell; and the second broadcast information includes the set of other information and excludes the set of system information. In this way, it is possible to avoid broadcasting the set of system information related to the neighbor cell to the entire coverage area of the serving cell, reduce the power consumption of satellite system for information transmission, and improve the utilization of channel resources.

## Description

### RELATED APPLICATION

The present disclosure claims priority to Chinese Patent Application NO. 202410335350.7, entitled of "methods and apparatuses for broadcasting and receiving broadcast information, and electronic device", and filed on March 22, 2024, which is herein incorporated by reference in its entirety.

### TECHNICAL FIELD

The present disclosure relates to the technical field of satellite communication, and particularly to a method for broadcasting, a method for receiving broadcast information, an apparatus for broadcasting method, an apparatus for receiving broadcast information, and an electronic device.

### BACKGROUND

The system information of a 5th Generation Mobile Communication Technology (5G) communication system includes a Master Information Block (MIB) and a series of System Information Blocks (SIBs).

In the series of SIBs, there are some SIBs related to the neighbor cells, such as the neighbor cell configurations in SIB2, SIB3, SIB4, SIB5 and SIB 19. The neighbor cell-related SIBs represent information about the neighbor cells of a currently camped cell, including neighbor cell configuration information related to measurement, reselection and neighbor satellite ephemeris; a terminal is capable of detecting and reselecting the neighbor cells using the neighbor cell-related SIBs, so as to enable the terminal to switch to a new camped cell according to a neighbor cell detection result before the coverage of the currently camped cell (serving cell) ends, ensuring that the terminal can continuously camp on different cells in scenarios where cells change dynamically, thereby maintaining the continuity of network services for the terminal.

In existing 3rd Generation Partnership Project (3GPP) standard protocols, the neighbor cell-related system information is transmitted at a cell level. To ensure the continuity of network services for all terminals within the coverage area of the currently camped cell, the network typically needs to broadcast the identical neighbor cell-related system information to the entire coverage area of the currently camped cell by a broadcasting manner.

However, within the entire coverage area of the currently camped cell, there may be a target terminal that does not currently require cell measurement or reselection, such as a target terminal located in a central area of the currently camped cell. When the network still broadcasts the neighbor cell-related system information to the entire coverage area, it will increase the transmission power consumption of the satellite, occupy and congest the air interface links, and result in waste of channel resources.

### SUMMARY

The present disclosure provides a method and an apparatus for broadcasting, a method and an apparatus for receiving broadcast information, and an electronic device, which are used to reduce the transmission power consumption of a satellite for sending neighbor cell-related system information, and improve the utilization of channel resources. The specific technical solutions are as follows.

In a first aspect, the present disclosure provides a method for broadcasting, including:
determining an edge area of a coverage area of a current serving cell and a non-edge area of the coverage area of the current serving cell; and
sending first broadcast information to the edge area and sending second broadcast information to the non-edge area, and the first broadcast information includes a set of system information related to a neighbor cell of the serving cell and a set of other information unrelated to the neighbor cell of the serving cell; and the second broadcast information includes the set of other information and excludes the set of system information.

Based on the above method, it is possible to avoid sending the identical neighbor cell-related system information to the entire coverage area of the serving cell, reduce the transmission power consumption of the network device for sending the system information related to the neighbor cell, and improve the utilization of channel resources.

In a possible implementation, the set of other information includes scheduling information of system information, and the scheduling information is used to instruct a terminal to obtain the set of system information in an on-demand request manner or a direct obtainment manner;
if, in the scheduling information, a scheduling type for the set of system information is configured as a broadcast type, the terminal is instructed to directly obtain the set of system information; and
if, in the scheduling information, the scheduling type for the set of system information is configured as a non-broadcast type, the terminal is instructed to acquire the set of system information in the on-demand request manner.

Based on the above method, the terminal can obtain the set of system information related to the neighbor cell of the serving cell in an on-demand request manner or a direct obtainment manner, after determining the scheduling type for the set of system information related to the neighbor cell of the serving cell.

In a possible implementation, the set of system information at least includes a neighbor cell configuration in SIB19;
if a scheduling type for the neighbor cell configuration is configured as a broadcast type, a terminal is instructed to directly obtain the neighbor cell configuration; and
when the scheduling type for the neighbor cell configuration is configured as a non-broadcast type, the terminal is instructed to acquire the neighbor cell configuration in the on-demand request manner.

Based on the above method, the terminal can separately obtain the neighbor cell configuration in SIB19 in an on-demand request manner or a direct obtainment manner, after determining the scheduling type for the neighbor cell configuration.

In a possible implementation, the sending second broadcast information to the non-edge area includes:
configuring the scheduling type for the set of system information in the second broadcast information as a non-broadcast type;
determining whether an acquisition request for the set of system information initiated by a terminal in the non-edge area based on the on-demand request manner is received;
if so, issuing the set of system information to the terminal based on the acquisition request; and
if not, broadcasting the set of other information to the non-edge area.

Based on the above method, when determining that there is system information related to the neighbor cell with the non-broadcast type has not been received, the terminal device can request the network device to issue the set of system information related to the neighbor cell of the serving cell, thereby reducing the transmission power consumption of the network device for sending the set of system information related to the neighbor cell, and saving system resources.

In a possible implementation, the determining the edge area of the coverage area of the current serving cell and the non-edge area of the coverage area of the current serving cell includes:
determining an edge sub-area of the coverage area;
selecting, in the coverage area, one or more candidate sub-areas that extend from the edge sub-area inward to a set distance within the coverage area; and
designating the one or more candidate sub-areas as the edge area, and designating the remaining sub-areas in the coverage area as the non-edge area.

Based on the above method, it is possible to determine the edge area and the non-edge area from the coverage area of the serving cell, and after the edge area and the non-edge area are determined, send broadcast information containing different content to the edge area and the non-edge area by broadcasting, thus avoiding sending the set of system information related to the neighbor cell to the entire coverage area of the serving cell, and saving the system resources and the power consumption.

In a possible implementation, after the determining the edge area of the coverage area of the current serving cell and the non-edge area of the coverage area of the current serving cell, the method further includes:
determining whether a movement speed of the coverage area is greater than the movement speed of a terminal in the coverage area;
if so, determining an upper perimeter and a lower perimeter of a projection of the edge area along a movement direction, and modifying the lower perimeter to be the non-edge area, and the lower perimeter is opposite to the upper perimeter; and
if not, keeping all perimeters of the edge area unchanged.

Based on the above method, it is possible to further simplify the edge area according to the relative speeds of the network device and the terminal device, so that the area where the network device sends the set of system information related to the neighbor cell to the terminal device can be smaller, thereby saving the air interface resources, and improving the utilization of channel resources.

In a possible implementation, the coverage area is a fully enclosed area, the edge area is an outer perimeter of the fully enclosed area, and a width of the outer perimeter is equal to a width of n beam positions, where n is an integer greater than or equal to 1.

In a second aspect, the present disclosure provides a method for receiving broadcast information, which is applied to a terminal device, including:
receiving, when accessing a network device in a non-edge area, broadcast information sent by the network device, and the broadcast information includes a set of other information unrelated to a neighbor cell of a serving cell of the network device, and excludes a set of system information related to the neighbor cell of the serving cell, and the set of other information includes scheduling information of the set of system information; and
determining, based on the scheduling information, a scheduling type for the set of system information, and acquiring, according to a data acquisition manner corresponding to the scheduling type, the set of system information.

Based on the above method, when determining that system information related to the neighbor cell with a non-broadcast type has not been received, the terminal device can obtain the set of system information related to the neighbor cell according to a data acquisition manner corresponding to the scheduling type for the set of system information, so as to prevent each terminal in the coverage area from receiving the set of system information related to the neighbor cell broadcasted by the network device, thereby reducing the transmission power consumption of the network device for sending the set of system information related to the neighbor cell, saving air interface resources, and improving the utilization of channel resources.

In a possible implementation, the determining, based on the scheduling information, a scheduling type for the set of system information, and acquiring, according to the data acquisition manner corresponding to the scheduling type, the set of system information includes:
determining, based on the scheduling information, whether the scheduling type is a broadcast type or a non-broadcast type;
determining, if the scheduling type is the broadcast type, that the data acquisition manner is to directly obtain the set of system information; and
determining, if the scheduling type is the non-broadcast type, the data acquisition manner by: determining, based on a current operating state of the terminal, a data request manner corresponding to the current operating state of the terminal, and requesting the set of system information from the network device according to the data request manner.

Based on the above method, the terminal device can determine an acquisition manner for acquiring the set of system information related to the neighbor cell according to the scheduling type for the set of system information related to the neighbor cell in the scheduling information, so that when it is determined that system information related to the neighbor cell of the non-broadcast type has not been received, each type of terminal device can request the network device to issue the corresponding set of system information related to the neighbor cell.

In a possible implementation, the requesting, if the operating state is an idle state, the set of system information from the network device according to the data acquisition manner includes:
determining whether any system information with a non-broadcast type has is not been received;
initiating, if so, a random access procedure, and initiating a first acquisition request for the set of system information to the network device via an on-demand system information request manner, so that the network device issues, based on the first acquisition request, the set of system information to a current terminal, and the first acquisition request at least includes a request for acquiring neighbor cell configuration-related information in SIB2 to SIB5 and in SIB19; and
continuing, if not, to use the received system information.

Based on the above method, the terminal device located in the non-edge area and being in the idle state can request the set of system information related to the neighbor cell from the network device via the on-demand system information request manner, thereby reducing the transmission power consumption of the network device for sending the set of system information related to the neighbor cell, saving the air interface resources and improving the utilization of channel resources.

In a possible implementation, the requesting, if the operating state is a connected state, the set of system information from the network device according to the data acquisition manner includes:
reporting, through a dedicated system information request manner, a second acquisition request for the set of system information to the network device, so that the network device issues, based on the second acquisition request, the set of system information to a current terminal, and the second acquisition request at least includes a request for acquiring neighbor cell configuration-related information in SIB2 to SIB5 and in SIB19.

Based on the above method, the terminal device located in the non-edge area and being in the connected state can request the set of system information related to the neighbor cell from the network device through a Dedicated SIB Request, thus reducing the transmission power consumption of the network device for sending the set of system information related to the neighbor cell, saving the air interface resources and improving the utilization of channel resources.

In a third aspect, the present disclosure provides an apparatus for broadcasting, including:
an area division module configured to determine an edge area of a coverage area of a current serving cell and a non-edge area of the coverage area of the current serving cell; and
a data sending module configured to send first broadcast information to the edge area and send second broadcast information to the non-edge area, and the first broadcast information includes a set of system information related to a neighbor cell of the serving cell and set of other information unrelated to the neighbor cell of the serving cell; and the second broadcast information includes the set of other information and excludes the set of system information.

In a possible implementation, the data sending module is further configured to:
the set of other information includes scheduling information of system information, and the scheduling information is used to instruct a terminal to obtain the set of system information in an on-demand request manner or a direct obtainment manner;
if, in the scheduling information, a scheduling type for the set of system information is configured as a broadcast type, instruct the terminal to directly obtain the set of system information; and
if, in the scheduling information, the scheduling type for the set of system information is configured as a non-broadcast type, instruct the terminal to acquire the set of system information in the on-demand request manner.

In a possible implementation, the set of system information at least includes a neighbor cell configuration in SIB19;
if a scheduling type for the neighbor cell configuration is configured as a broadcast type, a terminal is instructed to directly obtain the neighbor cell configuration; and
if the scheduling type for the neighbor cell configuration is configured as a non-broadcast type, the terminal is instructed to acquire the neighbor cell configuration in the on-demand request manner.

In a possible implementation, the data sending module is specifically configured to:
configure the scheduling type for the set of system information in the second broadcast information as a non-broadcast type;
determine whether an acquisition request for the set of system information initiated by a terminal in the non-edge area based on the on-demand request manner;
issue, if so, the set of system information to the terminal based on the acquisition request; and
broadcast, if not, the set of other information to the non-edge area.

In a possible implementation, the area division module is specifically configured to:
determine an edge sub-area of the coverage area;
select, in the coverage area, one or more candidate sub-areas that extend from the edge sub-area inward to a set distance within the coverage area; and
designate the one or more candidate sub-areas as the edge area, and designate the remaining sub-areas in the coverage area as the non-edge area.

In a possible implementation, the area division module is further configured to:
determine whether a movement speed of the coverage area is greater than the movement speed of a terminal within the coverage area;
determine, if so, an upper perimeter and a lower perimeter of a projection of the edge area along in a movement direction, and modify the lower perimeter to be the non-edge area, and the lower perimeter is opposite to the upper perimeter; and
keep, if not, all perimeters of the edge area unchanged.

In a fourth aspect, the present disclosure provides an apparatus for receiving broadcast information, including:
a data reception module configured to receive, when accessing a network device in a non-edge area, broadcast information sent by a network device, and the broadcast information includes a set of other information unrelated to a neighbor cell of a serving cell of the network device, and excludes a set of system information related to the neighbor cell of the serving cell, and the set of other information includes scheduling information of the set of system information; and
a data processing module configured to determine, based on the scheduling information, a scheduling type for the set of system information, and acquire, according to a data acquisition manner corresponding to the scheduling type, the set of system information.

In a possible implementation, the data processing module is specifically configured to:
determine, based on the scheduling information, whether the scheduling type is a broadcast type or a non-broadcast type;
determine, if the scheduling type is the broadcast type, that the data acquisition manner to directly obtain the set of system information; and
determine, if the scheduling type is the non-broadcast type, the data acquisition manner by: determining, based on a current operating state of the terminal, a data request manner corresponding to the current operating state of the terminal, and request the set of system information from the network device according to the data request manner.

In a possible implementation, when the operating state is an idle state, the data processing module is specifically configured to:
determine whether any system information with a non-broadcast type has not been received;
initiate, if so, initiate a random access procedure, and initiate a first acquisition request for the set of system information to the network device via an on-demand system information request manner, so that the network device issues, based on the first acquisition request, the set of system information to the current terminal, and the first acquisition request at least includes a request for acquiring neighbor cell configuration-related information in SIB2 to SIB5 and in SIB19; and
continue, if not, to use the received system information.

In a possible implementation, if the operation state is a connected state, the data processing module is specifically configured to:
report, through a dedicated system information request manner, a second acquisition request for the set of system information to the network device, so that the network device issues, based on the second acquisition request, the set of system information to the current terminal, and the second acquisition request at least includes a request for acquiring neighbor cell configuration-related information in SIB2 to SIB5 and in SIB19.

In a fifth aspect, the present disclosure provides an electronic device, including:
a memory configured to store a computer program; and
a processor configured to implement the steps of the aforementioned method for broadcasting or the steps of the aforementioned method for receiving broadcast information when executing the computer program stored in the memory.

In a sixth aspect, the present disclosure provides a computer-readable storage medium, storing a computer program, which implements the steps of the aforementioned method for broadcasting or the steps of the aforementioned method for receiving broadcast information when being executed by a processor.

For the solutions in the second to sixth aspects and the technical effects achievable by each aspect, please refer to the above description of the first aspect and the technical effects achievable by various possible solutions in the first aspect, which will not be repeated here.

### BRIEF DESCRIPTION OF DRAWINGS

In order to more clearly illustrate the technical solutions in the embodiments of the present disclosure or in the prior art, the drawings to be used in the description of the embodiments or the prior art will be briefly introduced below. Obviously, the drawings involved in the following description only illustrate some embodiments of the present disclosure, and other drawings can be obtained by those of ordinary skill in the art according to these drawings without paying any inventive effort.
FIG. 1 illustrates a flowchart of a method for broadcasting according to an embodiment of the present disclosure;
FIG. 2 illustrates a schematic diagram of a network structure according to an embodiment of the present disclosure;
FIG. 3 illustrates a schematic diagram of a scenario where a network device sends a set of system information to a terminal device according to an embodiment of the present disclosure;
FIG. 4 illustrates a simplified schematic diagram of an edge area according to an embodiment of the present disclosure;
FIG. 5 illustrates a flowchart in which a network device sends other information sets in a non-edge area according to an embodiment of the present disclosure;
FIG. 6 illustrates a flowchart of a method for receiving broadcast information according to an embodiment of the present disclosure;
FIG. 7 illustrates a schematic diagram of a scenario where a terminal device receives broadcast information according to an embodiment of the present disclosure;
FIG. 8 illustrates a flowchart in which a terminal device located in a non-edge area and being in an idle state acquires a set of system information according to an embodiment of the present disclosure;
FIG. 9 illustrates a flowchart in which a terminal device located in a non-edge area and in a connected state acquires a set of system information according to an embodiment of the present disclosure;
FIG. 10 illustrates a schematic diagram of a scenario where a terminal device obtains a set of system information according to an embodiment of the present disclosure;
FIG. 11 illustrates a schematic diagram of a structure of an apparatus for broadcasting according to an embodiment of the present disclosure;
FIG. 12 illustrates a schematic diagram of a structure of an apparatus for receiving broadcast information according to an embodiment of the present disclosure; and
FIG. 13 illustrates a schematic diagram of a structure of an electronic device according to an embodiment of the present disclosure.

### DESCRIPTION OF EMBODIMENTS

In order that the objectives, technical solutions and advantages of the embodiments of the present disclosure are clearer, the present disclosure will be further described in detail with reference to the drawings. The specific operation methods in the method embodiments may also be applied to the apparatus embodiments or the system embodiments. It shall be noted that in the description of the present disclosure, "a plurality of" is understood as "at least two". "And/or" describes an association relationship between associated objects and indicates that there may be three relationships. For example, "A and/or B" may mean three situations: A exists alone, both A and B exist, and B exists alone. "A is connected to B" may mean two situations: A is directly connected to B, and A is connected to B through C. In addition, in the description of the present disclosure, the terms such as "first" and "second" are only used for the purpose of distinguishing descriptions, and shall not be understood as indicating or implying relative importance, nor shall they be understood as indicating or implying an order.

In order to facilitate the understanding of the solutions, relevant terms involved in the present disclosure are explained as follows:

### Cell

In a cellular mobile communication system, a cell refers to an area covered by a base station or a portion of a base station (a sector antenna), and a terminal device (a mobile station) within the area can be reliably communicated with the base station via a wireless channel (radio channel). In a satellite communication system, a satellite cell refers to an area covered by radio waves sent by a satellite, and a radio communication station within the area can use the satellite as a relay for communication.

### 5G System Information

Master Information Block (MIB): including cell bar status information and basic physical layer information required for receiving further system information.

### System Information Block (SIB)

SIB 1: defining the scheduling of other system information blocks and including information required for initial access.
SIB 2: including cell reselection information, which is mainly related to a serving cell.
SIB 3: including serving frequency information and intra-frequency neighbor cell information which are related to cell reselection.
SIB 4: including New Radio (NR) inter-frequency neighbor cell information related to cell reselection.
SIB 5: including Evolved Universal Terrestrial Radio Access (E-UTRA) neighbor cell information related to cell reselection.
SIB 6: including an Earthquake and Tsunami Warning System (ETWS) primary notification.
SIB 7: including an ETWS secondary notification.
SIB 8: including a Commercial Mobile Alert System (CMAS) warning notification.
SIB 9: including information related to GPS time and Coordinated Universal Time (UTC).
SIB 19: including a Non-Terrestrial Networks (NTN) serving cell and neighbor satellite parameters.

The embodiments of the present disclosure are described in detail below with reference to the drawings.

### Embodiment 1

System information blocks include various information types, some of which are related to the neighbor cell, such as the neighbor cell configurations in the system information blocks SIB2, SIB3, SIB4, SIB5 and SIB19. To facilitate representation, hereinafter the neighbor cell configurations in the system information blocks SIB2, SIB3, SIB4, SIB5 and SIB19 are collectively referred to as a set of system information. The set of system information related to the neighbor cell records neighbor cell configuration information, thereby enabling a terminal to detect and reselect the neighbor cell according to the neighbor cell configuration information (e.g., neighbor cell access criteria, neighbor cell frequencies). Some of the system information blocks are unrelated to the neighbor cells, including those related to a serving cell of the serving satellite, or related to a notification or an alarm, such as SIB6 to SIB8, and these system information blocks are collectively referred to as a set of other information in the present disclosure. The system information blocks related to the serving cell of the serving satellite record the serving satellite configuration information, and the terminal can determine how to access the serving satellite according to the serving satellite configuration information.

When falling within the coverage area of a satellite beam (a serving cell) and located in an edge area of the satellite coverage area, the terminal can detect a neighbor cell signal quality based on neighbor cell-related SIB configurations, and can hand over, before the coverage of the current serving cell ends, to a new serving cell from the current serving cell according to a neighbor cell detection result, so that the terminal can camp on different serving cells to ensure the continuous access to network services.

At present, for a cellular mobile communication system, a terminal and a network usually use 3GPP protocols for information interaction. In a 3GPP standard protocol, system information is transmitted at a cell level, i.e., the network needs to send the identical neighbor cell-related system information to the entire coverage area within the serving cell by a broadcasting manner. For a satellite communication system, however, the satellite network has a wide coverage area and a large number of beam positions, and there may be a target terminal that does not currently require cell measurement or reselection within the entire coverage area of the serving cell. Thus, when the satellite network still sends the neighbor cell-related system information r to the entire coverage area by a broadcasting manner, this will increase the transmission power consumption of the satellite for transmitting the neighbor cell-related system information to the coverage area, occupy and congest the air interface links, and cause waste of channel resources.

In view of this, in order to reduce the transmission power consumption of the satellite for sending the neighbor cell-related system information and improve the utilization of channel resources, a first aspect of the present disclosure provides a method for broadcasting, which specifically includes: determining an edge area of a coverage area of a current serving cell and a non-edge area of the coverage area of the current serving cell; sending first broadcast information to the edge area and sending second broadcast information to the non-edge area; and the first broadcast information includes a set of system information related to a neighbor cell of the serving cell and a set of other information unrelated to the neighbor cell of the serving cell; and the second broadcast information includes the set of other information and excludes the set of system information.

Through the method provided in the present disclosure, a network device (satellite) can send the set of system information related to the neighbor cell of the serving cell only in the edge area of the serving cell, and sends the set of other information in the non-edge area of the serving cell. By setting the scheduling type for the set of system information related to the neighbor cell as a "non-broadcast" type, the terminal located in the non-edge area can request, when determining that system information with the non-broadcast type has not been received, the set of system information related to the neighbor cell from the network device. In this way, it is possible to avoid sending the identical neighbor cell-related system information to the entire coverage area of the serving cell, reduce the transmission power consumption of the satellite for transmitting the system information, and improve the utilization of channel resources.

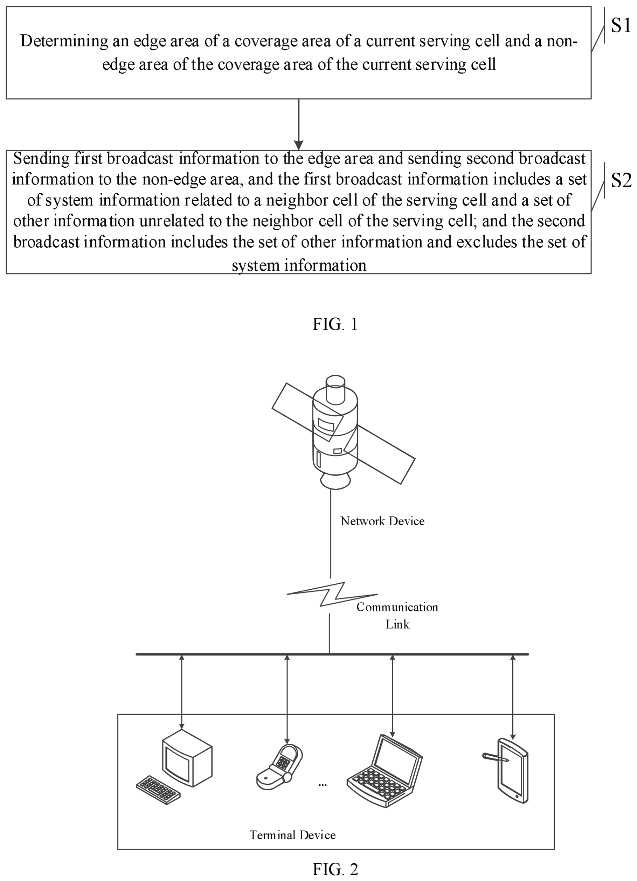

Referring to FIG. 1, which illustrates a flowchart of a method for broadcasting according to Embodiment 1 of the present disclosure, and the method includes:
S1: determining an edge area of a coverage area of a current serving cell and a non-edge area of the coverage area of the current serving cell.

Referring to FIG. 2, which illustrates a schematic diagram of a network structure according to an embodiment of the present disclosure. As illustrated in FIG. 2, the network structure includes a terminal device and a network device, and the method according to Embodiment 1 of the present disclosure is operatable in the network device.

The terminal device may be called a user terminal or User Equipment (UE), which may be deployed on land, including indoor, outdoor, handheld, wearable or vehicle-mounted devices. For example, the terminal device may be a mobile phone, a tablet (pad), a computer with a wireless transceiver function, a virtual reality (VR) terminal device, an augmented reality (AR) terminal device, a wireless terminal in industrial control, a vehicle-mounted terminal, and a wireless terminal in self-driving. In the present disclosure, the terminal device may also be called a terminal, a UE unit, a UE station, a mobile station, a mobile unit, a mobile device or a UE terminal device.

The network device usually has the wireless transceiver function and mobile characteristics. In the present disclosure, the network devices may be a satellite or a balloon station. For example, satellite may be a Low Earth Orbit (LEO) satellite, a Medium Earth Orbit (MEO) satellite, a Geostationary Earth Orbit (GEO) satellite or a High Elliptical Orbit (HEO) satellite. The LEO is movable relative to the ground, and the coverage area on the ground changes with the movement of the satellite. However, the signal propagation distance between LEO satellite and the terminal device is short (usually 500 km to 1500 km) and the link loss is low. Therefore, the satellite has low requirements for the transmission power of the terminal device.

The orbital altitude of the GEO satellite is usually more than 30,000 km. In order to ensure the signal coverage of the satellite and improve the system capacity of the communication network, the satellite may adopt multi-beam to cover the ground. For example, one satellite may use dozens or hundreds of beams to cover the ground, and one beam may cover a ground area with a diameter of tens to hundreds of kilometers. Of course, the network device may also be a base station deployed on land or in water. For example, the network device may be a next generation NodeB (gNB) or a next generation-evolved NodeB (ng-eNB). In this embodiment, the gNB provides the UE with a user plane function and a control plane function of the New Radio (NR), and the ng-eNB provides the UE with a user plane function and a control plane function of the Evolved Universal Terrestrial Radio Access (E-UTRA). The number and the type of the network device are not specifically limited in the present disclosure.

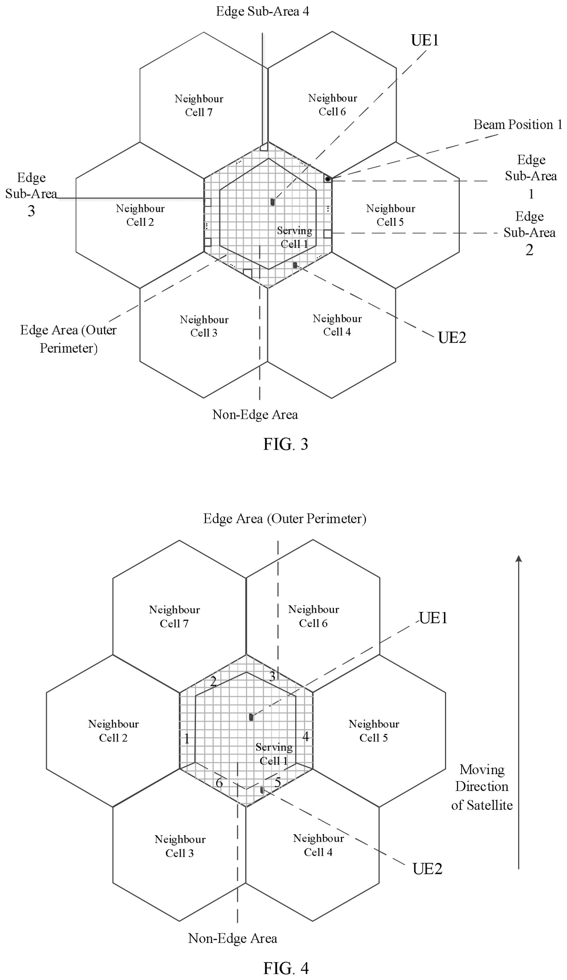

Referring to FIG. 3, which illustrates a schematic diagram of a scenario where a network device sends a set of system information to a terminal device according to the present disclosure. In the prior art, the network device usually sends the system information of a cell (including a set of other information unrelated to the neighbor cell of a serving cell and a set of system information related to the neighbor cell of the serving cell) to each beam position in a ground coverage area (e.g., the position corresponding to each grid in a serving cell 1) by a periodic broadcasting manner.

In some embodiments, any terminal device in the ground coverage area can search for signals of surrounding cells, measure the signal quality of each surrounding cell, receive the system information of the cell sent by the network device, and select an appropriate cell to access. For example, when being in an idle state and performing cell reselection, the terminal device may detect the signal qualities of nearby neighbor cells; when a certain cell in the neighbor cells meets the cell reselection conditions, the terminal device reselects the cell. For another example, when being in a connected state, the terminal device has already accessed a certain cell, and may detect the signal qualities of the current serving cell and neighbor cells; when it is determined that the signal quality of a certain neighbor cell is better than that of the serving cell, the cell handover procedure is triggered to control the terminal device to access the neighbor cell with the better signal quality.

In the embodiment of the present disclosure, among the terminals in the ground coverage area, there is a target terminal far away from the neighbor cells, such as a terminal UE1 in FIG. 3. In practical applications, such target terminal may not be able to search for the information of the surrounding cell and there is no need of cell handover at present. Therefore, such target terminal does not need to acquire the set of system information related to the neighbor cells. In view of this, the network device of the present disclosure may firstly determine the edge area and the non-edge area of the coverage area of the current serving cell, and the edge area represents an area close to the neighbor cell, and the terminals in the edge area have a greater demand for cell handover.

The edge area and the non-edge area of the coverage area are specifically determined as follows.

Referring to the serving cell 1 in FIG. 3, the network device can firstly determine edge sub-areas of the coverage area (e.g., edge sub-areas 1 to 4), in which the location of the edge sub-area 1 is the location of a beam position of the cell, for example as illustrated in FIG. 1, the beam position 1 corresponds to the edge sub-area 1, and the number of the edge sub-areas in the coverage area is not specifically limited in the present disclosure. Next, the network device selects, in the coverage area, one or more candidate sub-areas that extend from the edge sub-areas to the interior of the coverage area for a predetermined distance, and designates the one or more candidate sub-areas as the edge area, such as the outer ring of the serving cell 1. In the present disclosure, the predetermined distance may be the width of several, dozens or hundreds of beam positions, and may be predetermined according to actual application requirements.

After determining the edge area, the network device may further exclude the edge area from the coverage area to obtain the remaining sub-areas, and finally designate the remaining sub-areas as the non-edge area.

In the embodiment of the present disclosure, the coverage area of the serving cell is related to the location where the network device is deployed and the beam emitted by the network device. The coverage area may be a fully enclosed area, and the shape of the coverage area may be a regular polygon, such as a regular quadrangle, a regular hexagon and a regular octagon. Of course, the shape of the coverage area may also be a circle, an ellipse, a star, or any other shape, which is not specifically limited in the present disclosure. In order to facilitate the subsequent illustration of the edge area and the non-edge area, the present disclosure takes the coverage area in the shape of a regular hexagon as an example.

In the embodiment of the present disclosure, as illustrated in FIG. 3, the edge area may be the outer perimeter of the fully enclosed area. For different satellite systems, the coverage area of the satellite on the ground varies in size, and the period for transmitting the set of system information to the terminal device also differs. The width of the outer perimeter may be predetermined to the width of n beam positions, where n is an integer greater than or equal to 1 (e.g., the width of 1 beam position or the width of 2 beam positions). The width of the outer perimeter is not specifically limited in the present disclosure. During implementation, the network device may define the edge area to be as narrow as possible on the premise that the terminal device has sufficient time to receive the set of system information related to the neighbor cells within the edge area, thereby reducing the transmission power consumption of the network device for sending the set of system information related to the neighbor cells and improving the utilization of channel resources.

In the embodiment of the present disclosure, due to the fact that different orbiting satellites have different rotation periods around the earth, in order to further reduce the transmission power consumption of the network device for sending the set of system information related to the neighbor cells and improve the utilization of channel resources, the network device may further simplify the edge area. The specific simplification process is as follows:

Referring to FIG. 4, which illustrates a simplified schematic diagram of an edge area according to an embodiment of the present disclosure. After determining the edge area and the non-edge area of the coverage area of the current serving cell, the network device may firstly determine whether a movement speed of the coverage area (i.e., its own movement speed) is greater than the movement speed of a terminal in the coverage area. If it is determined that the movement speed of the coverage area is greater than the movement speed of the terminal in the coverage area, the network device can determine an upper perimeter (as illustrated in FIG. 4, sides 1 to 4 of the hexagonal edge area) and a lower perimeter (as illustrated in FIG. 4, sides 5 and 6 of the hexagonal edge area) of the edge area projected along the moving direction of the satellite, and the lower perimeter is opposite to the upper perimeter. Since the movement speed of the coverage area is greater than the movement speed of the terminal, the terminal can only enter the coverage area of the current serving cell from the upper perimeter rather than entering from the lower perimeter. Therefore, the network device may modify the lower perimeter of the edge area into the non-edge area, that is, only the upper perimeter area of the coverage area is taken as the final edge area. If the network device determines that the movement speed of the coverage area is less than or equal to the movement speed of the terminal in the coverage area, the terminal may enter the coverage area of the current serving cell from either the upper perimeter or the lower perimeter. Thus, the network device may keep all perimeters of the edge area (sides 1 to 6) unchanged, that is, both the upper perimeter area and the lower perimeter area of the coverage area are taken as the final edge area.

By determining the edge area and the non-edge area of the coverage area of the serving cell, and simplifying the edge area according to the movement speeds of the network device and the terminal, it is possible to minimize the transmission power consumption of the network device for sending the set of system information, save the air interface resources, and improve the utilization of channel resources.

S2: sending first broadcast information to the edge area and sending second broadcast information to the non-edge area, and the first broadcast information includes a set of system information related to a neighbor cell of the serving cell and a set of other information unrelated to the neighbor cell of the serving cell; and the second broadcast information includes the set of other information and excludes the set of system information.

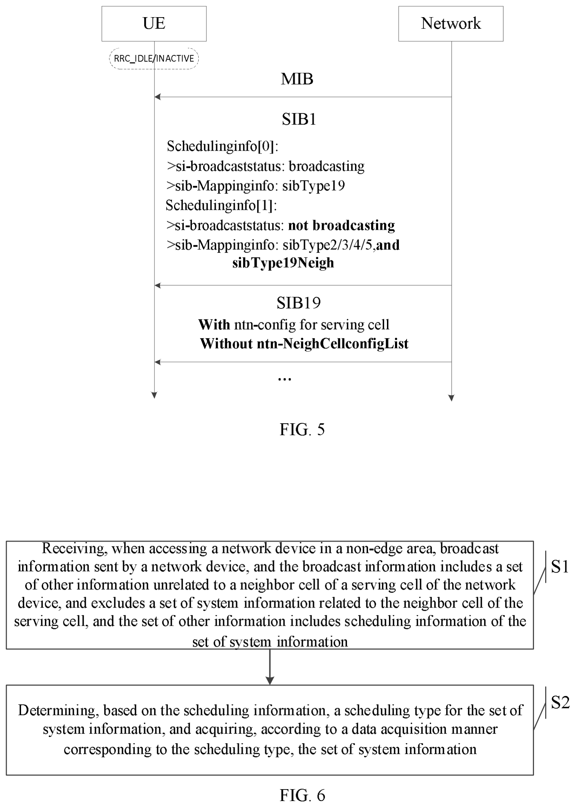

In the embodiment of the present disclosure, reference is made to FIG. 5, which illustrates a flowchart in which a network device sends the set of other information in a non-edge area according to an embodiment of the present disclosure. After determining an edge area and a non-edge area of a serving cell, a network device can send, by broadcasting, to a terminal device located in the edge area, the set of other information unrelated to the neighbor cells of the serving cell, such as satellite configuration information related to the serving cell (ntn-config for serving cell in SIB19) and a set of system information (ntn-NeighCellConfigList in SIB2 to SIB5 and SIB19) related to the neighbor cells of the serving cell, that is, first broadcast information; and sends, to a terminal located in the non-edge area, the set of other information unrelated to the neighbor cells of the serving cell, i.e., second broadcast information.

In the embodiment of the present disclosure, the set of other information include scheduling information of system information, such as scheduling information of a set of system information related to the serving cell, or scheduling information of a set of system information related to the neighbor cells of the serving cell. The scheduling information is used to instruct the terminal to obtain the set of system information related to the neighbor cells in an on-demand request manner or a direct obtainment manner.

Specifically, if, in the scheduling information, a scheduling type for the set of system information is configured as a non-broadcast type (si-BroadcastStatus is set to notBroadcasting), it indicates that the set of system information (ntn-NeighCellConfigList in SIB2 to SIB5 and SIB19) needs to be acquired by the terminal in the on-demand request (on-demand SI) manner.

In the embodiment of the present disclosure, if, in the scheduling information, the scheduling type for the set of system information is configured as a broadcast type (si-BroadcastStatus is set to broadcasting), it indicates that ntn-NeighCellConfigList in SIB2 to SIB5 and SIB19 is directly obtained by the terminal. The network device can send the set of system information related to the neighbor cells and the set of other information to the edge area by broadcasting. Specifically, si-BroadcastStatus corresponding to either of the set of system information and the set of other information can be set to broadcasting.

In the embodiment of the present disclosure, the set of system information related to the neighbor cells of the serving cell at least includes a neighbor cell configuration (ntn-NeighCellConfigList) in SIB19. The neighbor cell configuration is obtained by adding a new sibType19Neigh subtype to the existing system information block type (SIB-TypeInfo), and if a scheduling type of the neighbor cell configuration is set to a broadcast type, it indicates that the terminal may directly obtain the neighbor cell configuration; if the scheduling type of the neighbor cell configuration is a non-broadcast type, it indicates that the terminal needs to acquire the neighbor cell configuration using a updated on-demand SI request manner. However, in the existing solutions, there is no sibType19Neigh subtype in the system information block type. Therefore, the terminal device cannot request the neighbor cell configuration in SIB19 from the network device through the on-demand request method.

The set of system information related to the neighbor cells is sent to the edge area of the serving cell by broadcasting, and since in most scenarios, the terminals enter the serving cell through cell reselection or handover in the edge area of the serving cell, the terminals may directly obtain the set of system information related to the neighbor cells in the edge area. The set of other information including the scheduling information of the system information are only sent to the non-edge area of the serving cell. If having not previously received the set of system information related to the neighbor cells in the edge area, the terminal device may request the set of system information related to the neighbor cells from the network device, thus avoiding the network device from periodically sending the set of system information related to the neighbor cells to all areas in the coverage area of the serving cell, reducing the transmission power consumption of the network device for sending the set of system information, and improving the utilization of channel resources.

In the embodiment of the present disclosure, in order to ensure that the terminal device located in the non-edge area can also acquire the set of system information related to the neighbor cells, when the network device sends the second broadcast information to the non-edge area, the scheduling type for the set of system information related to the neighbor cells in the second broadcast information can be configured as a non-broadcast type; it is determined whether there is received an acquisition request for the set of system information related to the neighbor cells initiated by the terminal in the non-edge area in the on-demand request manner; if so, the set of system information related to the neighbor cells is issued to the terminal according to the acquisition request; and if not, the set of other information are broadcasted to the non-edge area and the set of system information is not broadcasted.

To sum up, in the method for broadcasting of the present disclosure, the network device can determine the edge area and the non-edge area of the coverage area of the serving cell, send the first broadcast information to the edge area by broadcasting and send the second broadcast information to the non-edge area. The set of other information includes scheduling information of system information. If it is determined that the system information related to the neighbor cells with the non-broadcast type has not been received, the terminal device can determine a request mode for requesting the set of system information related to the neighbor cells from the network device according to the scheduling information, so as to request the set of system information related to the neighbor cells from the network device. In this way, it is possible to avoid sending the identical set of system information related to the neighbor cells to all areas in the coverage area by broadcasting, thereby reducing the transmission power consumption of the network device for sending the system information set, saving the air interface resources and improving the utilization of channel resources.

### Embodiment 2

Based on the network architecture illustrated in FIG. 2, the present disclosure further provides a method for receiving broadcast information, which may be operated in a terminal device, and specifically includes: firstly, receiving, when accessing a network device in a non-edge area, broadcast information sent by the network device, and the broadcast information includes a set of other information unrelated to the neighbor cell of a serving cell of the network device and excludes a set of system information related to the neighbor cell of the serving cell, and the set of other information includes scheduling information of the set of system information related to the neighbor cell of the serving cell; next, determining, based on the scheduling information in the broadcast information, a scheduling type for the set of system information, and acquiring, according to a data acquisition manner corresponding to the scheduling type, the set of system information.

Through the method of the present disclosure, when accessing the network device in the non-edge area, the terminal firstly receives the broadcast information sent by the network device; then determines a scheduling type for the set of system information according to the scheduling information in the broadcast information; and finally acquires the set of system information in the data acquisition manner corresponding to the scheduling type, thereby avoiding each terminal in the coverage area of the serving cell from receiving the identical neighbor cell-related system information. By broadcasting the set of system information related to the neighbor cells with a broadcast scheduling type in the edge area and with a non-broadcast scheduling type in the non-edge area, it is possible to reduce the transmission power consumption of the satellite for sending the set of system information, and improve the utilization of channel resources.

Referring to FIG. 6, which illustrates a flowchart of a method for receiving broadcast information according to Embodiment 2 of the present disclosure, and the method includes:

S1: receiving, when accessing a network device in a non-edge area, broadcast information sent by a network device.

In the embodiment of the present disclosure, it is assumed that the network device 1 includes a serving cell 1 that provides a network 1, and the network device 2 includes a serving cell 2 that provides a network 2. The terminal device receives the broadcast information sent by the current network device when determining that the serving cell (network 1) is changed to the serving satellite cell (network 2) (i.e., when the terminal device reselects and accesses), or when determining that the coverage area of the satellite cell of the current network device is entered (i.e., when the terminal device accesses initially), but the terminal device receives different broadcast information when accessing the network device in different areas. Specifically, when the terminal device accesses the network device in the non-edge area of the serving cell, the broadcast information includes the set of other information unrelated to the neighbor cells of the serving cell of the network device, and excludes a set of system information related to the neighbor cells of the serving cell, and the set of other information include scheduling information of the set of system information related to the neighbor cells of the serving cell. When the terminal device accesses the network device in the edge area of the serving cell, the broadcast information received by the terminal further includes a set of system information related to the neighbor cells of the satellite cell. During implementation, the terminal device can determine whether the serving cell has been handed over by determining whether a frequency point or a physical cell identity (PCI) is changed.

In this way, when accessing the network device in the non-edge area, the terminal device can receive the broadcast information related to the handed-over serving cell sent by the network device.

S2: determining, based on the scheduling information, a scheduling type for the set of system information, and acquiring, according to a data acquisition manner corresponding to the scheduling type, the set of system information.

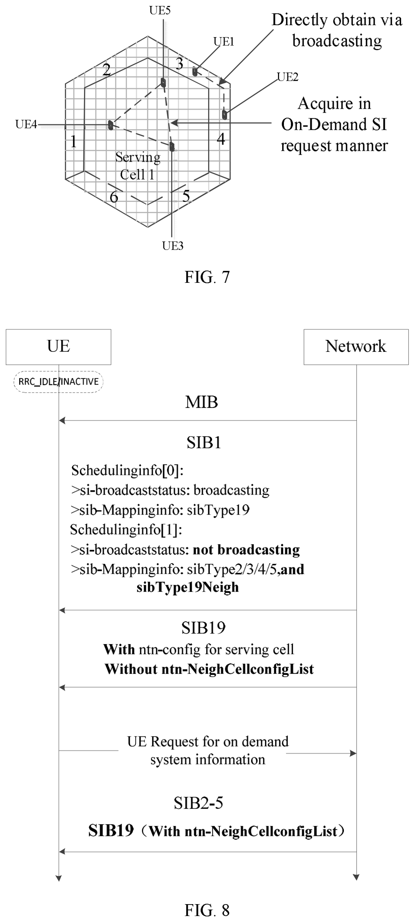

Combined with the above Embodiment 1 and referring to FIG. 7, which illustrates a schematic diagram of a scenario where a terminal device receives broadcast information according to an embodiment of the present disclosure, and in this scenario, any terminal accessing a network device in either an edge area or a non-edge area can receive broadcast information. However, in the present disclosure, the terminals located in the edge area and the non-edge area obtain the set of system information related to the neighbor cells in different ways. In the embodiment of the present disclosure, the terminals (e.g., UE1 and UE2) accessing the network device in the edge area may directly obtain the set of system information related to the neighbor cells from the broadcast information, which is the same as the prior art and will not be repeated here. However, the terminals accessing network device in the non-edge area (e.g., UE3 to UE5) need to request the set of system information related to the neighbor cells from the network device via the on-demand SI manner. During implementation, after receiving the broadcast information sent by the network device, the terminal device can firstly determine the scheduling type for the set of the system information related to the neighbor cells of the serving cell, according to the scheduling information of the set of system information in the broadcast information, and then request the set of system information according to the data request manner corresponding to the scheduling type.

In the embodiment of the present disclosure, the scheduling type may be a broadcast type or a non-broadcast type. For the terminal accessing in the edge area, the scheduling type for the system information in the received broadcast information is the broadcast type, and the terminal device may determine that the set of system information related to the neighbor cells can be directly obtained. For the terminal accessing in the non-edge area, the scheduling type for the set of system information in the received broadcast information is the non-broadcast type, and the terminal device can firstly determine a current operating state of itself, then determine a data request manner corresponding to the current operating state, and finally request the set of system information related to the neighbor cells from the network device according to the data request manner corresponding to the current operating state.

Under normal circumstances, most terminal devices in the non-edge areas enter the satellite cell from the edge area of the serving cell. According to the existing 3GPP specification, such terminal devices can receive, in the edge area, broadcasts including the set of other information of the serving cell and the set of system information related to the neighbor cells of the serving cell. However, among some special terminal devices in the non-edge areas, there may be a terminal device having entered the serving cell without passing through the edge area of the serving cell, or a terminal device having received complete broadcast information in the edge area but needing to update the set of system information related to the neighbor cells in the non-edge area. For example, there may be a terminal powered on in the non-edge area, a terminal temporarily disconnected from the original cell and entering the current serving cell, or a terminal having received the set of system information in the edge area of the serving cell but the set of system information is expired in the non-edge area.

In order to enable the above special terminal devices to obtain the set of system information related to the neighbor cells, the set of system information related to the neighbor cells can be obtained by the existing on-demand SI request manner.

For the procedure of the on-demand SI request manner at present, the existing 3GPP protocol does not support the terminals to obtain the system information SIB19 related to the neighbor cells or the neighbor cell configuration in SIB19 from the network device by a request, and only supports obtaining SIB19 by broadcasting. Since SIB19 includes the information necessary for the serving satellite access, in order to enable the special terminal devices to obtain the neighbor cell configuration in SIB19 according to actual application requirements, the present disclosure extends the request for the content related to the neighbor cells of SIB19 on the basis of the existing on-demand SI request manner procedure, and proposes a data request manner corresponding to the operating state to request the set of system information related to the neighbor cells from the network device for the terminals in different operating states. When the request for the content related to the neighbor cells of SIB19 is extended, specifically, a new subtype sibType19Neigh can be defined in the existing type SIB-TypeInfo, and this subtype may be used to indicate that the neighbor-related ephemeris information (ntn-NeighCellConfigList in SIB19) needs to be acquired via an updated on-demand SI request manner.

Referring to FIG. 8, which illustrates a flowchart in which a terminal device located in a non-edge area and being in an idle state acquires a set of system information according to an embodiment of the present disclosure. As illustrated in FIG. 8, the terminal device may firstly receive MIB, SIB1 and satellite configuration information related only to the serving cell (ntn-config for serving cell in SIB 19) sent by a network device.

In the embodiment of the present disclosure, as illustrated in FIG. 8, the terminal device can determine a scheduling type for the set of system information related to the neighbor cells according to the scheduling information in SIB1, i.e., determine the respective scheduling types for SIB2 to SIB5 and SIB19. If the terminal device determines that the scheduling type for the set of system information related to the neighbor cells is a non-broadcast type and the terminal device is operated in an idle state, the terminal device may firstly determine whether there is any system information with the non-broadcast type has not been received, and if so, the terminal device may initiate a random access procedure, and a first acquisition request for the set of system information related to the neighbor cells is initiated to the network device via an on-demand SI request manner (i.e., a UE request for on-demand system information), so that that the network device can issue the set of system information related to the neighbor cells, i.e., SIB19 with ntn-NeighCellConfigList and SIB2 to SIB5, to the current terminal according to the first acquisition request. The type and number of the system information related to the neighbor cells to be acquired by the first acquisition request are not specifically limited in the present disclosure. In practical applications, the terminal device may request corresponding target system information in the set of system information related to the neighbor cells defined by the network device. If determining that each system information of the non-broadcast type has been received, the terminal device continues to use the received system information.

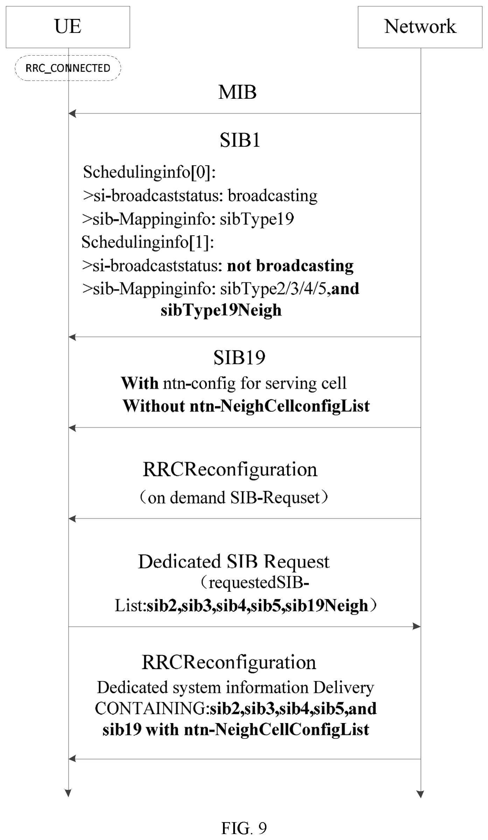

Referring to FIG. 9, which illustrates a flowchart in which a terminal device located in a non-edge area and in a connected state acquires a set of system information according to an embodiment of the present disclosure. For the terminal device in a connected state, in the prior art, the set of system information is acquired via an on-demand SI request manner through a Dedicated SIB Request procedure. Since the Dedicated SIB Request procedure only supports the acquiring of SIB12 to SIB14, SIB20 to SIB21 and posSIB, the present disclosure extends SIB-ReqInfo in a message Dedicated SIB Request to support the acquiring of system information related to the neighbor cells, such as SIB2 to SIB5 and SIB19Neigh. The specific procedure is as follows.

As illustrated in FIG. 9, the terminal device located in the non-edge area and in the connected state can firstly receive MIB, SIB1 and satellite configuration information only related to the serving cell (ntn-config for serving cell in SIB19) sent by the network device.

If the terminal device determines that the scheduling type for the set of system information related to the neighbor cells is a non-broadcast type according to the scheduling information, and the terminal device is operated in a connected state, the terminal device can report a second acquisition request for the set of system information related to the neighbor cells to the network device through a Dedicated SIB Request manner, so that the network device issues the set of system information related to the neighbor cells to the current terminal based on the second acquisition request. For example, the terminal reports a Dedicated SIB Request, which includes RequestedSIB-List, i.e., a list of requests for the system information related to the neighbor cells. In the list of requests, the terminal device may fill in information of the desired set of system information related to the neighbor cells, so as to request the network device to issue SIB19 with ntn-NeighCellConfigList and SIB2 to SIB5. Finally, when receiving the Dedicated SIB Request reported by the terminal device, the network device may issue the set of system information related to the neighbor cells to the terminal device through Dedicated system information Delivery in RRCReconfiguration.

Under the existing 3GPP protocol, SIB19 is required to carry both the serving satellite ephemeris information and the neighbor satellite ephemeris information, and the terminal in the idle state needs the assistance of the serving satellite ephemeris information to access the network and achieve uplink synchronization. Thus, SIB19 must be transmitted by broadcasting. On this basis, the present disclosure decouples the satellite configuration information (serving satellite ephemeris information) and the neighbor cell-related ephemeris information (neighbor satellite ephemeris information) in SIB19, and allows different scheduling types to be configured respectively. For example, the satellite configuration information in SIB19 may be configured as the broadcast type, and the neighbor cell-related ephemeris information may be configured as the non-broadcast type. The network device may broadcast two versions of SIB19 under one cell, i.e., broadcasting SIB19 carrying both the serving satellite ephemeris information and the neighbor satellite ephemeris information in the cell edge area, and broadcasting SIB19 not carrying the neighbor satellite ephemeris information in the non-edge area of the cell. By broadcasting two versions of SIB 19 in this decoupling mode, it avoids sending the set of system information related to the neighbor cells to the terminal devices with low demand for such information (i.e., terminal devices in the non-edge areas), thereby reducing the transmission power consumption of the network device for sending the set of system information related to the neighbor cells, saving the air interface resources, and improving the utilization of channel resources.

Under the existing 3GPP protocol, the Dedicated SIB Request for applying for the set of system information in the connected state does not support applying for the system information set related to the neighbor cells. In view of this, the present disclosure enhances the Dedicated SIB Request by extending the field of SIB-ReqInfo, thereby enabling the network device to support the terminal device in the connected state to apply for the set of system information related to the neighbor cells (including the neighbor cell information ntn-NeighCellConfigList in SIB2 to SIB5 and in SIB19). By extending the field of SIB-ReqInfo, the terminal device located in the non-edge area and in the connected state can request the set of system information related to the neighbor cells from the network device if determining that there is system information related to the neighbor cells with the non-broadcast type has not been received, thereby reducing the transmission power consumption of the network device for sending the set of system information related to the neighbor cells to the terminal device, saving the air interface resources, and improving the utilization of channel resources.

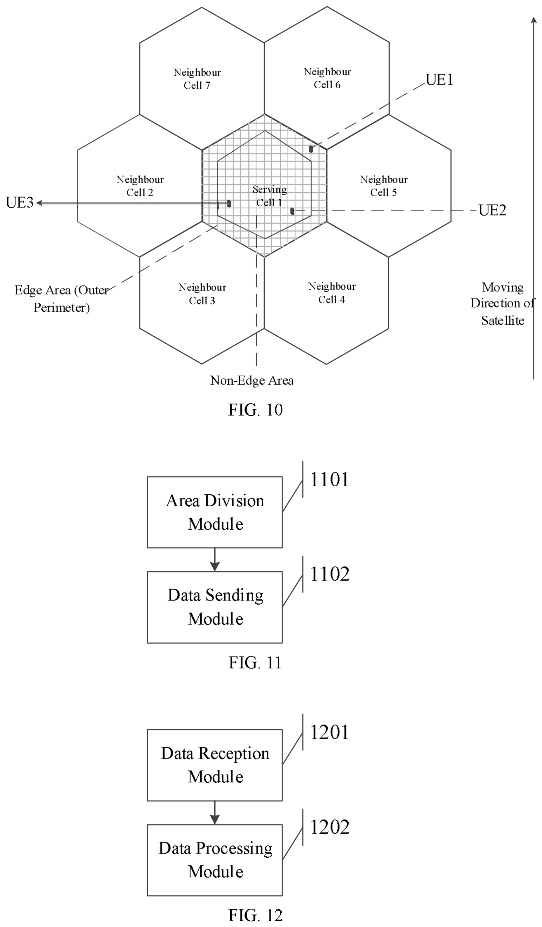

To more clearly illustrate the inventive points of the present disclosure, the process by which the terminal devices (including those in the idle state and in the connected state) located in the edge area and the non-edge area obtain the set of system information related to the neighbor cells will be described below in conjunction with Embodiment 1, Embodiment 2, and FIG. 10.

### (I) For the terminal device located in the edge area and being in the idle state

Step 1: firstly, the network device sends first broadcast information to the terminal device (UE1) located in the edge area. The first broadcast information includes (1) MIB; (2) SIB1, and the SIB1 includes the scheduling information of SIB2 to SIB5 and of SIB19, and it can be determined that all SIB2 to SIB5 and SIB19 are sent in the broadcast type; (3) SIB2 to SIB5; and (4) SIB19, and SIB19 carries serving satellite ephemeris information and neighbor satellite ephemeris information.

Step 2: the terminal device UE1 entering the edge area of Cell 1 and being in an idle state (including the terminal device camping on Cell 1 by cell selection/reselection/handover/redirection, etc.) directly obtains a set of system information related to the neighbor cells from the first broadcast information according to the 3GPP protocol specification.

Here, it shall be pointed out that the procedure for the terminal device entering the edge area of Cell 1 and in a connected state to obtain the set of system information related to the neighbor cells is the same as that for the terminal device entering the edge area of Cell 1 and being in the idle state, which will not be repeated here.

### (II) For the terminal device (UE2) located in the non-edge area and being in the idle state

Step 1: firstly, the network device sends second broadcast information to the terminal device UE2 located in the non-edge area. The second broadcast information includes (1) MIB; (2) SIB1, which includes the scheduling information for SIB2 to SIB5 and for SIB19, and it can be determined that serving satellite ephemeris information in SIB19 is sent in the broadcast type, and the neighbor satellite ephemeris information in SIB2 to SIB5 and in SIB 19 is sent in the non-broadcast type (i.e., in the system information scheduling of SIB1, si-BroadcastStatus for SIB2 to SIB5 and SIB19NeighCell is configured as notBroadcasting); and (3) SIB 19, which only carries the serving satellite ephemeris information and does not carry the neighbor satellite ephemeris information.

Step 2: For the terminal devices temporarily disconnected from the network to enter the non-edge area of Cell 1 and being in an idle state (i.e., special terminal devices which have not received the system information related to the neighbor cells by broadcasting in the edge area), SIB2 to SIB5 and SIB19 (including ntn-NeighCellConfigList) are acquired in the improved on-demand SI request procedure of the present disclosure.

### (III) For the terminal device (UE3) located in the non-edge area and being in the connected state

Step 1: firstly, the network device sends second broadcast information to the terminal device UE3 located in the non-edge area. The second broadcast information includes (1) MIB; (2) SIB1, which includes the scheduling information of SIB2 to SIB5 and of SIB19, and it can be determined that serving satellite ephemeris information in SIB19 is sent in the broadcast type, and neighbor satellite ephemeris information in SIB2 to SIB5 and in SIB19 is sent in the non-broadcast type (i.e., in SIB1, si-BroadcastStatus for SIB2 to SIB5 and SIB19NeighCell is configured as notBroadcasting); (3) SIB19, which only carries the serving satellite ephemeris information and does not carry the neighboring satellite ephemeris information.

Step 2: for the terminal devices powered on in the non-edge area of Cell 1 and being in the connected state (i.e., special terminal devices which have not received the set of system information related to the neighbor cells by broadcasting in the edge area): if determining that the system information related to the neighboring cells has not been received, the terminal device applies for SIB2 to SIB5 and SIB19 (including ntn-NeighCellConfigList) using the enhanced-type message Dedicated SIB Request provided in the present disclosure, and the network device issues SIB2 to SIB5 and SIB19 (including ntn-NeighCellConfigList) to the terminal device through dedicated system information Delivery in RRCReconfiguration.

To sum up, in the method of the present disclosure, since the satellite communication system has a wider coverage area and more beam positions, and the overlapping coverage area between the cells is limited, the terminal only needs to measure the neighbor cells at the edge of a cell to ensure the continuity of the network services used by the terminal in dynamic scenarios. In the prior art, the network device is required to repeatedly send the set of system information related to all the neighbor cells in all the areas of the cell, but in the present disclosure, the set of system information related to the neighbor cells are sent in a combined way, i.e., by broadcasting in the edge area of the cell and by terminal request at the non-edge area of the cell, thereby greatly reducing the area where the network device repeatedly sends the set of system information, In addition, by improving the existing on-demand SI request procedure and enhancing the Dedicated SIB Request, the present disclosure can meet the obtaining requirements of the terminals in various scenarios for the set of system information related to the neighbor cells, thereby reducing the transmission power consumption of the network device for sending the set of system information related to the neighbor cells, saving the air interface resources and improving the utilization of channel resources.

Based on the method according to Embodiment 1, an embodiment of the present disclosure further provides an apparatus for broadcasting corresponding to the method. FIG. 11 illustrates a schematic diagram of a structure of an apparatus for broadcasting according to an embodiment of the present disclosure, and the apparatus includes:
an area division module 1101 configured to determine an edge area of a coverage area of a current serving cell and a non-edge area of the coverage area of the current serving cell; and
a data sending module 1102 configured to send first broadcast information to the edge area and send second broadcast information to the non-edge area, and the first broadcast information includes a set of system information related to a neighbor cell of the serving cell and a set of other information unrelated to the neighbor cell of the serving cell; and the second broadcast information includes the set of other information and excludes the set of system information.

In a possible implementation, the data sending module 1102 is further configured to:
the set of other information includes scheduling information of system information, and the scheduling information is used to instruct a terminal to obtain the set of system information in an on-demand request manner or a direct obtainment manner;
if, in the scheduling information, a scheduling type for the set of system information is configured as a broadcast type, instruct the terminal to directly obtain the set of system information; and
if, in the scheduling information, the scheduling type for the set of system information is configured as a non-broadcast type, instruct the terminal to acquire the set of system information in the on-demand request manner.

In a possible implementation, the set of system information set at least includes neighbor cell configuration in SIB19;
if a scheduling type for the neighbor cell configuration is configured as a broadcast type, a terminal is instructed to directly obtain the neighbor cell configuration; and
if the scheduling type for the neighbor cell configuration is configured as a non-broadcast type, the terminal is instructed to acquire the neighbor cell configuration in the on-demand request manner.

In a possible implementation, the data sending module 1102 is specifically configured to:
configure the scheduling type for the set of system information in the second broadcast information as a non-broadcast type;
determine whether an acquisition request for the set of system information initiated by a terminal in the non-edge area based on the on-demand request manner is received;
issue, if so, the set of system information to the terminal based on the acquisition request;
broadcast, if not, the set of other information to the non-edge area.

In a possible implementation, the area division module 1101 is specifically configured to:
determine an edge sub-area of the coverage area;
select, in the coverage area, one or more candidate sub-areas that extend from the edge sub-area inward to a set distance within the coverage area;
designate the one or more candidate sub-areas as the edge area, and designate the remaining sub-areas in the coverage area as the non-edge area.

In a possible implementation, the area division module 1101 is further configured to:
determine whether a movement speed of the coverage area is greater than the movement speed of a terminal within the coverage area;
determine, if so, an upper perimeter and a lower perimeter of a projection of the edge area along in a movement direction, and modify the lower perimeter to be the non-edge area, and a lower perimeter is opposite to the upper perimeter;
keep, if not, all perimeters of the edge area unchanged.

Based on the method according to Embodiment 2, an embodiment of the present disclosure further provides an apparatus for receiving broadcast information corresponding to the method. FIG. 12 illustrates a schematic diagram of a structure of an apparatus for receiving broadcast information corresponding to Embodiment 2 of the present disclosure, and the apparatus includes:
a data reception module 1201 configured to receive, when accessing a network device in a non-edge area, broadcast information sent by a network device, and the broadcast information includes a set of other information unrelated to a neighbor cell of a serving cell of the network device, and excludes a set of system information related to the neighbor cell of the serving cell, and the set of other information include scheduling information of the set of system information;
a data processing module 1202 configured to determine, based on the scheduling information, a scheduling type for the set of system information, and acquire, according to a data acquisition manner corresponding to the scheduling type, the set of system information.

In a possible implementation, the data processing module 1202 is specifically configured to:
determine, based on the scheduling information, whether the scheduling type is a broadcast type or a non-broadcast type;
determine, if the scheduling type is the broadcast type, that the data acquisition manner is to directly obtain the set of system information;
determine, if the scheduling type is the non-broadcast type, the data acquisition manner by: determining, based on a current operating state of the terminal, a data request manner corresponding to the current operating state of the terminal, and request the set of system information from the network device according to the data request manner.

In a possible implementation, if the operating state is an idle state, the data processing module 1202 is specifically configured to:
determine whether any system information with a non-broadcast type has not been received;
initiate, if so, a random access procedure, and initiate a first acquisition request for the set of system information to the network device via an on-demand system information request manner, so that the network device issues, based on the first acquisition request, the set of system information to the current terminal, and the first acquisition request at least includes a request for acquiring neighbor cell configuration-related information in SIB2 to SIB5 and SIB19; and
continue, if not, to use the received system information.

In a possible implementation, when the operating state is a connected state, the data processing module 1202 is specifically configured to:
report, through a dedicated system information request manner, a second acquisition request for the set of system information to the network device, so that the network device issues, based on the second acquisition request, the set of system information to the current terminal, and the second acquisition request at least includes a request for acquiring neighbor cell configurations in SIB2 to SIB5 and in SIB19.

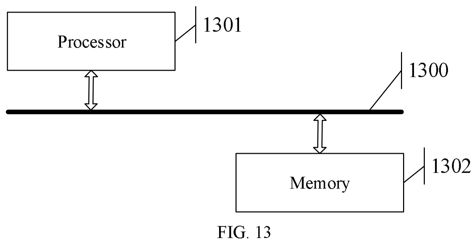

Based on the same inventive concept, an embodiment of the present disclosure further provides an electronic device, which can realize the functions of the apparatus for broadcasting or receiving broadcast information. Referring to FIG. 13, the electronic device includes:
at least one processor 1301, and a memory 1302 connected to the at least one processor 1301. The specific connection medium between the processor 1301 and the memory 1302 is not limited in the embodiment of the present disclosure. In FIG. 13, the processor 1301 and the memory 1302 are connected through a bus 1300 as an example. The bus 1300 is illustrated as a thick line in FIG. 13, and the connection modes between other components are only for schematic illustration and are not restrictive. The bus 1300 may include an address bus, a data bus, a control bus, etc., and is only represented by a thick line in FIG. 13 for the convenience of illustration, but it does not mean that there is only one bus or one type of bus. Alternatively, the processor 1301 may also be called a controller, and the name thereof is not limited.

In the embodiment of the present disclosure, the memory 1302 stores instructions that may be executed by at least one processor 1301, and the at least one processor 1301 may perform the method for broadcasting or receiving broadcast information described above by executing the instructions stored in the memory 1302. The processor 1301 can realize the functions of the modules in the apparatus illustrated in FIG. 11 or 12.

In this embodiment, the processor 1301 is a control center of the device, and various parts of the whole controlled device may be connected using various interfaces and lines. By running or executing the instructions stored in the memory 1302 and calling the data stored in the memory 1302, it is possible to realize various functions of the device and the data processing, thereby conducting overall monitoring of the device.

In a possible design, the processor 1301 may include one or more processing units, and the processors 1301 may be integrated with an application processor and a modem processor, in which the application processor mainly handles an operating system, a user interface, an application program, or the like, and the modem processor mainly handles a wireless communication. It can be understood that the modem processor may not be integrated into the processor 1301. The processor 1301 and the memory 1302 may be implemented on a same chip in some embodiments, and may also be implemented separately on independent chips in some embodiments.

The processor 1301 may be a general-purpose processor, such as a central processing unit (CPU), a digital signal processor, an application specific integrated circuit, a field programmable gate array or any other programmable logic device, a discrete gate or a transistor logic device, and a discrete hardware component, and can implement or perform the methods, steps and logic block diagrams disclosed in the embodiments of the present disclosure. The general processor may be a microprocessor or any conventional processor, etc. The steps of the method for broadcasting or receiving broadcast information disclosed in the embodiments of the present disclosure may be directly embodied as being performed by a hardware processor or a combination of hardware and software modules in the processor.

As a nonvolatile computer-readable storage medium, the memory 1302 may store nonvolatile software programs, nonvolatile computer-executable programs and modules. The memory 1302 may include at least one type of storage medium, such as a flash memory, a hard disk, a multimedia card, a card-type memory, a Random Access Memory (RAM), a Static Random Access Memory (SRAM), Programmable Read Only Memory (PROM), a Read Only Memory (ROM), an electrically erasable programmable read-only memory (EEPROM), a magnetic memory, a magnetic disk, an optical disk, or the like. The memory 1302 is any other medium that can carry or store desired program codes in the form of an instruction or a data structure and can be accessed by a computer, but is not limited thereto. The memory 1302 in the embodiments of the present disclosure may also be a circuit or any other device that can realize a storage function, and is used to store a program instruction and/or data.

By designing and programming the processor 1301, codes corresponding to the method for broadcasting or receiving broadcasting information which has been introduced in the aforementioned embodiments can be solidified into a chip, so that the chip can perform the steps of the method for broadcasting according to the embodiment illustrated in FIG. 1 or the method for receiving broadcasting information according to the embodiment illustrated in FIG. 6 during operation. How to design and program the processor 1301 is well known to those skilled in the art, and will not be described in detail here.

Based on the same inventive concept, an embodiment of the present disclosure further provides a storage medium storing a computer instruction, which when run on a computer, causes the computer to perform the method for broadcasting or receiving broadcast information described above.

In some possible embodiments, the aspects of the method for broadcasting or receiving broadcast information of the present disclosure may also be implemented in the form of a program product, which includes program codes for causing a control device to perform the steps in the method for broadcasting or receiving broadcast information according to various embodiments of the present disclosure described above when the program product is operated in the device.

Those skilled in the art shall appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, the apparatus (system) and the computer program product according to the embodiments of the present disclosure. It shall be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce devices for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

Obviously, various modifications and variations can be made to the present disclosure by those skilled in the art without departing from the spirit and the scope of the present disclosure. Thus, when these modifications and variations to the present disclosure fall within the scope of the claims of the present disclosure and the technical equivalents thereof, the present disclosure is also intended to include these modifications and variations.

## Claims

1. A method for broadcasting performed by a network device, comprising:
determining an edge area of a coverage area of a current serving cell and a non-edge area of the coverage area of the current serving cell; and
sending first broadcast information to the edge area and sending second broadcast information to the non-edge area, wherein the first broadcast information includes a set of system information related to a neighbor cell of the serving cell and a set of other information unrelated to the neighbor cell of the serving cell; and the second broadcast information includes the set of other information and excludes the set of system information.

2. The method for broadcasting according to claim 1, wherein the set of other information includes scheduling information of system information, and the scheduling information is used to instruct a terminal to obtain the set of system information in an on-demand request manner or a direct obtainment manner;
if, in the scheduling information, a scheduling type for the set of system information is configured as a broadcast type, the terminal is instructed to directly obtain the set of system information; and
if, in the scheduling information, the scheduling type for the set of system information is configured as a non-broadcast type, the terminal is instructed to acquire the set of system information in the on-demand request manner.

3. The method for broadcasting according to claim 1, wherein the set of system information at least includes a neighbor cell configuration in SIB 19;
if a scheduling type for the neighbor cell configuration is configured as a broadcast type, a terminal is instructed to directly obtain the neighbor cell configuration; and
if the scheduling type for the neighbor cell configuration is configured as a non-broadcast type, the terminal is instructed to acquire the neighbor cell configuration in the on-demand request manner.

4. The method for broadcasting according to claim 2, wherein the sending the second broadcast information to the non-edge area includes:
configuring the scheduling type for the system information set in the second broadcast information as a non-broadcast type;
determining whether an acquisition request for the set of system information initiated by a terminal in the non-edge area based on the on-demand request manner is received;
issuing, if so, the set of system information to the terminal based on the acquisition request; and
broadcasting, if not, the set of other information to the non-edge area.

5. The method for broadcasting according to claim 1, wherein the determining the edge area of the coverage area of the current serving cell and the non-edge area of the coverage area of the current serving cell includes:
determining an edge sub-area of the coverage area;
selecting, in the coverage area, one or more candidate sub-areas that extend from the edge sub-area inward to a set distance within the coverage area; and
designating the one or more candidate sub-areas as the edge area, and designating the remaining sub-areas in the coverage area as the non-edge area.

6. The method for broadcasting according to claim 1, wherein after the determining the edge area of the coverage area of the current serving cell and the non-edge area of the coverage area of the current serving cell, the method further includes:
determining whether a movement speed of the coverage area is greater than the movement speed of a terminal within the coverage area;
determining, if so, an upper perimeter and a lower perimeter of a projection of the edge area along a movement direction, and modifying the lower perimeter to be the non-edge area, wherein the lower perimeter is opposite to the upper perimeter; and
keeping, if not, all perimeters of the edge area unchanged.

7. The method for broadcasting according to claim 1, wherein the coverage area is a fully enclosed area, the edge area is an outer perimeter of the fully enclosed area, and a width of the outer perimeter is equal to a width of n beam positions, where n is an integer greater than or equal to 1.

8. A method for receiving broadcast information performed by a terminal device, comprising:
receiving, when accessing a network device in a non-edge area, broadcast information sent by the network device wherein the broadcast information includes a set of other information unrelated to a neighbor cell of a serving cell of the network device, and excludes a set of system information related to the neighbor cell of the serving cell, and the set of other information includes scheduling information of the set of system information; and
determining, based on the scheduling information, a scheduling type for the set of system information, and acquiring, according to a data acquisition manner corresponding to the scheduling type, the set of system information.

9. The method for receiving broadcast information according to claim 8, wherein the determining, based on the scheduling information, the scheduling type of the set of system information, and acquiring, according to the data acquisition manner corresponding to the scheduling type, the set of system information includes:
determining, based on the scheduling information, whether the scheduling type is a broadcast type or a non-broadcast type;
determining, if the scheduling type is the broadcast type, that the data acquisition manner is to directly obtain the set of system information; and
determining, if the scheduling type is the non-broadcast type, the data acquisition manner by: determining, based on a current operating state of the terminal, a data request manner corresponding to the current operating state of the terminal, and requesting the set of system information from the network device according to the data request manner.

10. The method for receiving broadcast information according to claim 9, wherein the requesting, if the operating state is an idle state, the set of system information from the network device according to the data acquisition manner includes:
determining whether any system information with a non-broadcast type has not been received;
initiating, if so, a random access procedure, and initiating a first acquisition request for the set of system information to the network device via an on-demand system information request manner, so that the network device issues, based on the first acquisition request, the set of system information to the current terminal, wherein the first acquisition request at least includes a request for acquiring neighbor cell configuration-related information in SIB2 to SIB5 and in SIB19; and
continuing, if not, to use the received system information.

11. The method for receiving broadcast information according to claim 9, wherein the requesting, if the operating state is a connected state, the set of system information from the network device according to the data acquisition manner includes:
reporting, through a dedicated system information request manner, a second acquisition request for the set of system information to the network device, so that the network device issues, based on the second acquisition request, the set of system information to the current terminal, wherein the second acquisition request at least includes a request for acquiring neighbor cell configuration-related information in SIB2 to SIB5 and in SIB19.

12. An apparatus for broadcasting, comprising:
an area division module configured to determine an edge area of a coverage area of a current serving cell and a non-edge area of the coverage area of the current serving cell; and
a data sending module configured to send first broadcast information to the edge area and send second broadcast information to the non-edge area, wherein the first broadcast information includes a set of system information related to a neighbor cell of the serving cell and a set of other information unrelated to the neighbor cell of the serving cell; and the second broadcast information includes the set of other information and excludes the set of system information.

13. The apparatus for broadcasting according to claim 12, wherein the data sending module is further configured to:
the set of other information includes scheduling information of system information, and the scheduling information is used to instruct a terminal to obtain the set of system information in an on-demand request manner or a direct obtainment manner;
if, in the scheduling information, a scheduling type for the set of system information is configured as a broadcast type, instruct the terminal to directly obtain the set of system information; and
if, in the scheduling information, the scheduling type for the set of system information is configured as a non-broadcast type, instruct the terminal to acquire the set of system information in the on-demand request manner.

14. The apparatus for broadcasting according to claim 12, wherein the set of system information at least includes a neighbor cell configuration in SIB19;
if a scheduling type for the neighbor cell configuration is configured as a broadcast type, a terminal is instructed to directly obtain the neighbor cell configuration; and
if the scheduling type for the neighbor cell configuration is configured as a non-broadcast type, the terminal is instructed to acquire the neighbor cell configuration in the on-demand request manner.

15. The apparatus for broadcasting according to claim 13, wherein the data sending module is specifically configured to:
configure the scheduling type for the set of system information in the second broadcast information as a non-broadcast type;
determine whether an acquisition request for the set of system information initiated by a terminal in the non-edge area based on the on-demand request manner is received;
issue, if so, the set of system information to the terminal based on the acquisition request; and
broadcast, if not, the set of other information to the non-edge area.

16. The apparatus for broadcasting according to claim 12, wherein the area division module is specifically configured to:
determine an edge sub-area of the coverage area;
select, in the coverage area, one or more candidate sub-areas that extend from the edge sub-area inward to a set distance within the coverage area; and
designate the one or more candidate sub-areas as the edge area, and designate the remaining sub-areas in the coverage area as the non-edge area.

17. The apparatus for broadcasting according to claim 12, wherein the area division module is further configured to:
determine whether a movement speed of the coverage area is greater than the movement speed of a terminal within the coverage area;
determine, if so, an upper perimeter and a lower perimeter of a projection of the edge area along in a movement direction, and modify the lower perimeter to be the non-edge area, wherein the lower perimeter is opposite to the upper perimeter; and
keep, if not, all perimeters of the edge area unchanged.

18. An apparatus for receiving broadcast information, comprising:
a data reception module configured to receive, when accessing a network device in a non-edge area, broadcast information sent by a network device, wherein the broadcast information includes a set of other information unrelated to a neighbor cell of a serving cell of the network device, and excludes a set of system information related to the neighbor cell of the serving cell, and the set of other information includes scheduling information of the set of system information; and
a data processing module configured to determine, based on the scheduling information, a scheduling type for the set of system information, and acquire, according to a data acquisition manner corresponding to the scheduling type, the set of system information.

19. The apparatus for receiving broadcast information according to claim 18, wherein the data processing module is specifically configured to:
determine, based on the scheduling information, whether the scheduling type is a broadcast type or a non-broadcast type;
determine, if the scheduling type is the broadcast type, that the data acquisition manner to directly obtain the set of system information; and
determine, if the scheduling type is the non-broadcast type, the data acquisition manner by: determining, based on a current operating state of the terminal, a data request manner corresponding to the current operating state of the terminal, and request the set of system information from the network device according to the data request manner.

20. The apparatus for receiving broadcast information according to claim 19, wherein if the operating state is an idle state, the data processing module is specifically configured to:
determine whether any system information with a non-broadcast type has not been received;
initiate, if so, a random access procedure, and initiate a first acquisition request for the set of system information to the network device via an on-demand system information request manner, so that the network device issues, based on the first acquisition request, the set of system information to the current terminal, wherein the first acquisition request at least includes a request for acquiring neighbor cell configuration-related information in SIB2 to SIB5 and in SIB19; and
continue, if not, to use the received system information.

21. The apparatus for receiving broadcast information according to claim 19, wherein if the operation state is a connected state, the data processing module is specifically configured to:
report, through a dedicated system information request manner, a second acquisition request for the set of system information to the network device, so that the network device issues, based on the second acquisition request, the set of system information to the current terminal, wherein the second acquisition request at least includes a request for acquiring neighbor cell configuration-related information in SIB2 to SIB5 and in SIB19.

22. An electronic device, comprising:
a memory configured to store a computer program; and
a processor configured to implement the steps of the method for broadcasting according to any one of claims 1 to 7 or the steps of the method for receiving broadcast information according to any one of claims 8 to 11 when executing the computer program stored in the memory.

23. A computer-readable storage medium, storing a computer program, which implements the steps of the method for broadcasting according to any one of claims 1 to 7 or the steps of the method for receiving broadcast information according to any one of claims 8 to 11 when being executed by a processor.
